# EUROPÄISCHE PATENTSCHRIFT

(11) **EP 0 665 160 B1**
(45) Veröffentlichungstag und Bekanntmachung des Hinweises auf die Patenterteilung: **13.10.1999**
(21) Anmeldenummer: 94120898.5
(22) Anmeldetag: 29.12.1994
(51) Int. Cl.: B64D 11/06

(54) **Vorrichtung zur Befestigung von dynamisch belasteten Bauteilen, insbesondere an einer Schiene oder dergleichen**
Device for fastening dynamically-loaded elements, especially to a rail or the like
Dispositif de raccordement pour éléments dynamiquement chargés, notamment à un rail ou analogue

(30) Priorität: 30.12.1993 DE 4345006
(43) Veröffentlichungstag der Anmeldung: 02.08.1995
(73) Patentinhaber: HONEYWELL AG, 63067 Offenbach (DE)
(72) Erfinder: Palatzky, Roland Dipl.-Ing., D-86356 Neusäss (DE)
(74) Vertreter: Herzbach, Dieter, Dipl.-Ing.

(56) Entgegenhaltungen:
- DE-A- 3 447 178
- DE-A- 3 804 354
- DE-C- 4 224 820
- US-A- 4 294 491
- US-A- 4 771 969
- US-A- 4 776 533
- US-A- 4 896 895

## Beschreibung

Die Erfindung betrifft eine Vorrichtung zur Befestigung von dynamisch belasteten Bauteilen, insbesondere an einer Schiene oder dergleichen.

Bezweckt wird vorzugsweise die Schaffung einer in Längsrichtung Belastungsspitzen abfangenden Schnellbefestigung von Bauteilen auf Sitzschienen von Flugzeugen.

Bisher ist es üblich, Bauteile an derartigen Schienen direkt und starr mit einer entsprechenden Kraftübertragung in allen drei Raumrichtungen vorzunehmen. Da hier nur eine Nachgiebigkeit innerhalb der Elastizität der verwendeten Materialien, beispielsweise Stahl- und Aluminiumlegierungen, vorliegt, kommt es bei stoßartigen Belastungen von befestigten Bauteilen dazu, daß diese unmittelbar über die Schiene oder dergleichen weiter abgeleitet werden. Hierdurch kann es zu extremen Beanspruchungen des zu befestigenden Bauteils selbst, der Befestigungsvorrichtung sowie der Schiene oder dergleichen kommen, was insbesondere bei Ausbildung der Schiene als Sitzschiene von Flugzeugen und der strukturellen Anwendung der Sitzschiene unerwünscht ist.

Eine Vorrichtung gemäß dem Oberbegriff des Anspruchs 1 ist aus DE-A-3 804 354 bekannt.

Mit der Erfindung soll eine Vorrichtung der eingangs genannten Art verfügbar gemacht werden, mit der wenigstens in der Richtung größter Belastungen Belastungsspitzen ohne Beeinträchtigung von Bauteilen, der Vorrichtung selbst und der Schiene abgefangen werden können. Insbesondere geht es dabei darum, Belastungsspitzen, die beim Be- und Entladen von Fracht vorwiegend in Längsrichtung bzw. X-Richtung auftreten, beanspruchungsmindernd abzufangen.

Erfindungsgemäß wird dieses Ziel durch die im Patentanspruch 1 genannten Merkmale gelöst. Bevorzugte weitere Ausgestaltungen der Erfindung sind den nachgeordneten Patentansprüchen zu entnehmen.

Vorteilhaft besteht die erfindungsgemäße Vorrichtung aus einer Grundplatte mit einer Aufnahmeöffnung für ein senkrechte Kräfte aufnehmendes Befestigungselement, einer auf der Grundplatte vorgesehenen Eingriffsanformung für eine Verbindung mit dem zu befestigenden Bauteil, einer an der Unterseite der Grundplatte vorgesehenen Eingriffsanformung für eine Querkräfte aufnehmende Befestigung des Bauteils, und mit einer in der Grundplatte gebildeten Ausnehmung für ein Längskräfte aufnehmendes Verbindungsteil, wobei in Längsrichtung der Grundplatte wenigstens eine weitere Ausnehmung für ein Dämpferelement vorgesehen ist, das an dem Verbindungsteil anliegt.

Das vorgesehene Dämpferelement besteht vorzugsweise aus Kunststoff, insbesondere aus einem vergüteten Polyurethankautschuk mit einer Härte von etwa 90 Shore.

Für das Verbindungsteil ist vorzugsweise ein Anschlag zur Begrenzung des Verformungsweges des Dämpferelementes vorgesehen, wobei der Verformungsweg bevorzugt etwa 2 mm bei einer maximalen Dämpfkraft von ca. 500 daN vorgesehen ist. Dieser Anschlag ist vorzugsweise an der Querkräfte aufnehmenden Eingriffsanformung ausgebildet, die über die Ausnehmung für das Dämpferelement ragt und damit gleichzeitig dazu dient, dieses abschnittsweise zu halten und zu führen.

Das Verbindungsteil ist nach einer bevorzugten Ausgestaltung der Erfindung in der Grundplatte längsbewegbar geführt und weist vorzugsweise einen rechtwinkligen Führungsabschnitt und einen zapfenförmigen Eingriffsabschnitt für ein Loch eines Längslochschienenbefestigungsprofils auf.

Nach einer weiteren bevorzugten Ausgestaltung der Erfindung besitzt die Querkräfte aufnehmende Anformung an der Grundplatte seitlich der Anlageflächen für den Eingriff in den Zwischenlochnutbereich des Längslochschienenbefestigungsprofils.

Nach einer bevorzugter weiteren Ausgestaltung der Erfindung ist in der Aufnahmeöffnung ein bolzenförmiges Befestigungselement mit seitlichen Arretieranformungen für den verrastenden Eingriff in die Nut zwischen zwei Löchern des Langlochschienenbefestigungsprofils vorgesehen.

Weitere Einzelheiten, Merkmale und Vorteile der Erfindung sind dem anschließenden Beschreibungsteil zu entnehmen, in dem die Erfindung unter Bezugnahme auf die beigefügten Zeichnungen näher erläutert wird. Es zeigen:
- Fig. 1: eine perspektivische Ansicht einer Grundplatte und einer Befestigungsschiene in Form eines Längslochschienenbefestigungsprofils, das für Sitzschienen in Flugzeugen verwendet wird;
- Fig. 2: eine perspektivische Unteransicht der Grundplatte mit eingesetzten Verbindungsteil und Dämpferelement;
- Fig. 3: einen Längsschnitt durch Grundplatte und Sitzschiene zur Veranschaulichung der Befestigung eines Bauteils;
- Fig. 4: eine schematisierte Draufsicht auf die auf einer Sitzschiene befestigten Grundplatte, auf der sich ein Bauteil befindet; und
- Fig. 5: eine Ansicht ähnlich Fig. 6, jedoch bei Belastung auf das Bauteil in Längs- bzw. X-Richtung.

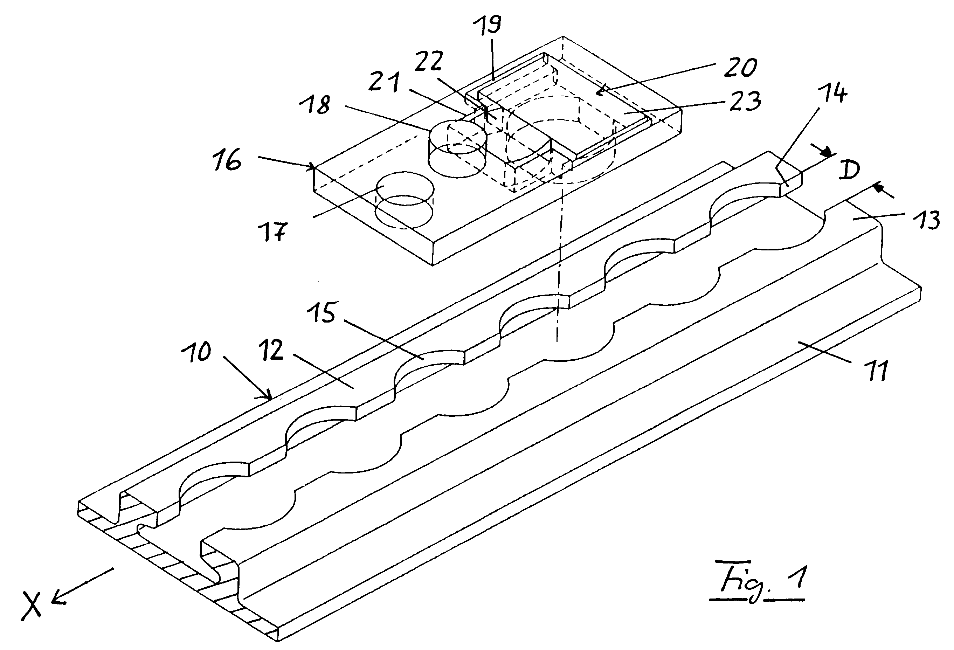

Fig. 1 zeigt perspektivisch einen Teil eines typischen Sitzschienenprofils 10, das aus einem plattenförmigen Grundteil 11 und daran angeformten Schienenabschnitten 12 und 13 besteht. Die Abschnitte 12 und 13 liegen parallel beabstandet zu dem plattenförmigen Abschnitt 11 und weisen zueinander, wobei zwischen ihnen ein Abstand D zur Bildung einer Eingriffsnut 14 existiert. Die Eingriffsnut 14 ist in regelmäßigen Abständen durch größere Einsetzlöcher 15 unterbrochen.

Perspektivisch oberhalb der Schiene 10 ist eine rechteckige Grundplatte 16 gezeigt, die eine Aufnahmeöffnung 17 für ein senkrechte Kräfte aufnehmendes Befestigungselement und eine zapfenförmige Eingriffsanformung 18 für eine Verbindung mit einem zu befestigenden Bauteil auf der Oberseite besitzt. In der Grundplatte 16 ist eine rechteckförmige Ausnehmung 19 für ein Längskräfte aufnehmendes Verbindungsteil 20 gebildet. Außerdem ist in Längsrichtung der Grundplatte 16, in Fig. 1 also in Richtung der Nut 14 der Schiene 10 bzw. in X-Richtung, eine weitere Ausnehmung 21 für ein plattenförmiges Längskraftdämpferelement 22 vorgesehen, das an dem Verbindungsteil 20 flächig anliegt.

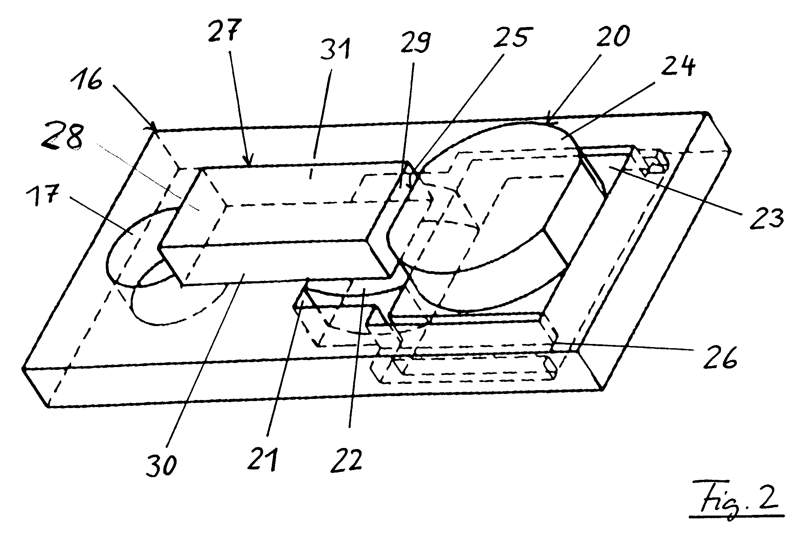

Fig. 2 zeigt eine unterseitige perspektivische Ansicht der Grundplatte 16. Das Verbindungsteil 20 ist erkennbar aus zwei Abschnitten ausgebildet, dem in Fig. 1 unterseitig erkennbaren rechtwinkligen Führungsabschnitt 23 und einem zapfenförmigen Eingriffsabschnitt 24, an dem eine Abplattung 25 als Anschlagfläche gebildet ist. Der rechtwinklige Führungsabschnitt 23 ist mit seitlichem Spiel von etwa 1 mm auf einen stufenförmigen Absatz 26 der Grundplatte 16 längsbewegbar geführt.

Auf der in Fig. 2 gezeigten Unterseite der Grundplatte 16 ist weiterhin eine, in Fig. 1 weggelassene, rechteckförmige Querkräfte aufnehmende Eingriffsanformung 27 vorgesehen, deren kürzere Seitenflächen 28 und 29 für den Eintritt in die Nut 14 vorgesehen und daher geringfügig kleiner als D sind, und deren Seitenflächen 30 und 31 Anlageflächen für die Eingriffsnut 14 bilden. Die Seitenfläche 29 dient gleichzeitig als Anschlag zur Begrenzung des Verformungsweges des Dämpferelements 22, der bei dem Ausführungsbeispiel etwa 2 mm beträgt. Die Eingriffsanformung 27 ragt über die Ausnehmung 21 für das Dämpferelement 22 und dient gleichzeitig zur abschnittsweisen Führung desselben.

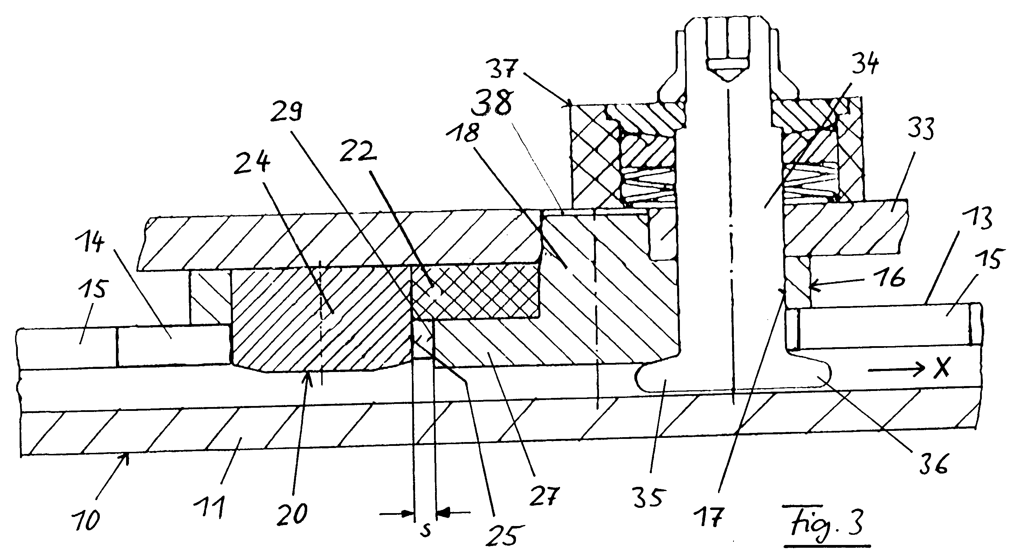

Der in Fig. 3 gezeigte Schnitt zeigt ein plattenförmiges Bauteil 33, das mittels der Grundplatte 16 unter Verwendung eines bolzenförmigen Befestigungselementes 34 an dem Längslochschienenbefestigungsprofil 10 angebracht ist. Das Befestigungselement 34 besitzt an seinem unteren Ende seitliche Arretieranformungen 35 und 36, die die Schienenabschnitte 12 und 13 untergreifen.

Mit 37 ist eine Verrastungseinrichtung bezeichnet, die an dem zu befestigenden Bauteil 37 anliegt und mit der die Befestigungsstellung des Befestigungselementes 34 sicherbar ist.

Fig. 3 ist zu entnehmen, daß die zapfenförmige Eingriffsanformung 18 formschlüssig in eine entsprechende Öffnung 38 des Bauteils 33 greift, und daß die an der Unterseite der Grundplatte 16 vorgesehene Eingriffsanformung 27 das Dämpferelement 22 übergreift. Der Abstand s zwischen der Anschlagfläche 29 und der Anschlagfläche 25 beträgt etwa 2 mm.

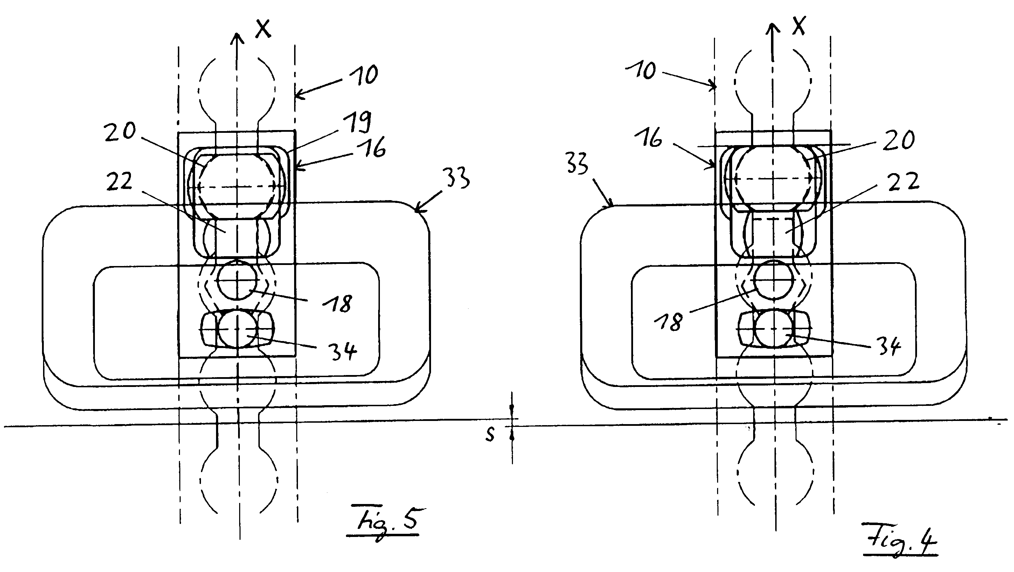

Fig. 4 zeigt eine Draufsicht auf ein Ausführungsbeispiel eines zu befestigenden Bauteils 33, das mittels der erfindungsgemäßen Vorrichtung an einer Sitzschiene 10 befestigt worden ist. Mit X ist die vorgesehene Belastungsrichtung angedeutet, in der eine Dämpfung von Belastungsspitzen, die vorwiegend beim Be- und Entladen von Fracht auftreten, abgefangen werden soll.

Fig. 5 zeigt eine Ansicht ähnlich Fig. 4, jedoch bei Belastung des Bauteils 33 in Richtung X, d. h., wenn das Dämpferelement 22 maximal verformt ist und die Anschlagflächen 25 und 29 sich in Berührung befinden. Aufgrund der relativen Anordnungen der Fig. 4 und 5 ist der Verformungsweg von 2 mm erkennbar.

## Patentansprüche

1. Vorrichtung zur Befestigung von dynamisch belasteten Bauteilen, insbesondere an einer Schiene oder dergleichen, bestehend aus einer Grundplatte (16) mit
einer Aufnahmeöffnung (17) für ein senkrechte Kräfte aufnehmendes Befestigungselement (34),
einer auf der Grundplatte (16) vorgesehenen Eingriffsanformung (18) für eine Verbindung mit dem zu befestigenden Bauteil (33); und mit
einer an der Unterseite der Grundplatte (16) vorgesehenen Eingriffsanformung (27) für eine Querkräfte aufnehmende Befestigung des Bauteils (33), gekennzeichnet durch
eine in der Grundplatte (16) gebildete Ausnehmung (19) für ein Längskräfte aufnehmendes Verbindungsteil (20), wobei in Längsrichtung (X) der Grundplatte (16) wenigstens eine weitere Ausnehmung (21) für ein Dämpferelement (22) vorgesehen ist, das an dem Verbindungsteil (20) anliegt.

2. Vorrichtung nach Anspruch 1, dadurch gekennzeichnet, daß das Dämpferelement (22) aus Kunststoff besteht.

3. Vorrichtung nach Anspruch 2, dadurch gekennzeichnet, daß der Werkstoff des Dämpferelements (22) ein vergüteter Polyurethankautschuk mit einer Härte von etwa 90 Shore ist.

4. Vorrichtung nach einem der vorangehenden Ansprüche, dadurch gekennzeichnet, daß für das Verbindungsteil (20) ein Anschlag (29) zur Begrenzung des Verformungsweges (s) des Dämpferelements (22) vorgesehen ist.

5. Vorrichtung nach Anspruch 4, dadurch gekennzeichnet, daß der Anschlag (29) an der Querkräfte aufnehmenden Eingriffsanformung (27) ausgebildet ist, die über die Ausnehmung (21) für das Dämpferelement (22) ragt.

6. Vorrichtung nach einem der vorangehenden Ansprüche, dadurch gekennzeichnet, daß das Verbindungsteil (20) in der Grundplatte (16) längsbewegbar geführt ist.

7. Vorrichtung nach Anspruch 6, dadurch gekennzeichnet, daß das Verbindungsteil (20) einen rechtwinkligen Führungsabschnitt (23) und einen zapfenförmigen Eingriffsabschnitt (24) für ein Loch (15) eines Längslochschienenbefestigungsprofils (10) aufweist.

8. Vorrichtung nach einem der vorangehenden Ansprüche, dadurch gekennzeichnet, daß die Querkräfte aufnehmende Anformung (27) an der Grundplatte (16) seitliche Anlageflächen (30, 31) für den Eingriff in eine Nut (14) eines Längslochschienenbefestigungsprofils (10) aufweist.

9. Vorrichtung nach einem der vorangehenden Ansprüche, dadurch gekennzeichnet, daß in der Aufnahmeöffnung (17) ein bolzenförmiges Befestigungselement (34) mit seitlichen Arretierungsanformungen (35, 36) für einen verrastenden Eingriff in ein Längslochschienenbefestigungsprofil (10) vorgesehen ist.

## Claims

1. Device for fastening dynamically-loaded elements, especially to a rail or the like, comprising a base plate (16) having a pick-up opening (17) for a fastening means (34) absorbing vertical forces, a engagement means (18) positioned on said base plate (16) which provides a connection to the element (33) to be fastened, and a engagement means (27) positioned on a bottom side of said base plate (16) for a fastening of said element (33) in order to absorb transverse forces, **characterized by** : a recess (19) provided in said base plate (16) for a connecting means (20) absorbing longitudinal forces, whereby at least one additional recess (21) is provided in longitudinal direction (X) of said base plate (16) for a damping means (22), whereby said damping means (22) rests against said connecting means (20).

2. Device according to claim 1, **characterized in that** said damping means (22) is made from plastic material.

3. Device according to claim 2, **characterized in that** the material of said damping means (22) is an improved polyurethane caoutchouc having a hardness of approximately 90 shore.

4. Device according to one of the preceding claims, **characterized in that** a stroke (29) is provided for said connecting means (20) in order to limit the strain path (s) of said damping means.

5. Device according to claim 4, **characterized in that** said stroke (29) is provided at said engagement means (27) absorbing the transverse forces, whereby said engagement means projects above the recess (21).

6. Device according to one of the preceding claims, **characterized in that** said connecting means (20) is guided longitudinally moveable in said base plate (16).

7. Device according to claim 6, **characterized in that** said connecting means (20) comprises a rectangular guidance section (23) and a cone-shaped engagement section (24) for an opening (15) of an oblong hole rail fastening profile (10).

8. Device according to one of the preceding claims, **characterized in that** said means (27) absorbing said transverse forces comprises lateral contact surfaces at the base plate (16) for the engagement into a slot (14) of an oblong hole rail fastening profile (10).

9. Device according to one of the preceding claims, **characterized in that** a bolt-shaped fastening means (34) having lateral arresting means (35, 36) is provided for an arresting engagement in an oblong hole rail fastening profile (10).

## Revendications

1. Dispositif destiné à la fixation de pièces chargées dynamiquement, notamment à un rail ou à un élément similaire, constitué d'une plaque de base (16) comprenant
une ouverture de réception (17) pour un élément de fixation (34) absorbant des forces verticales,
un appendice de prise (18) prévu sur la plaque de base (16), en vue d'une liaison avec la pièce à fixer (33) ; et comprenant
un appendice de prise (27) prévu sur le côté inférieur de la plaque de base (16) pour une fixation de la pièce (33), adsorbant des forces transversales, caractérisé par un évidement (19) formé dans la plaque de base (16) pour une pièce de liaison (20) absorbant des forces longitudinales, au moins un autre évidement (21) étant prévu dans la direction longitudinale (X) de la plaque de base (16), pour un élément d'amortissement (22) qui s'appuie contre la pièce de liaison (20).

2. Dispositif selon la revendication 1, caractérisé en ce que l'élément d'amortissement (22) est réalisé en matière plastique.

3. Dispositif selon la revendication 2, caractérisé en ce que le matériau de l'élément d'amortissement (22) est un caoutchouc polyuréthanne vieilli artificiellement, d'une dureté Shore d'environ 90.

4. Dispositif selon l'une des revendications précédentes, caractérisé en ce que pour la pièce de liaison (20), il est prévu une butée (29) destinée à limiter le déplacement de déformation (s) de l'élément d'amortissement (22).

5. Dispositif selon la revendication 4, caractérisé en ce que la butée (29) est formée sur l'appendice de prise (27) absorbant les forces transversales et faisant saillie par-dessus l'évidement (21) pour l'élément d'amortissement (22).

6. Dispositif selon l'une des revendications précédentes, caractérisé en ce que la pièce de liaison (20) est guidée de manière mobile en direction longitudinale dans la plaque de base (16).

7. Dispositif selon la revendication 6, caractérisé en ce que la pièce de liaison (20) présente un tronçon de guidage (23) rectangulaire et un tronçon de prise (24) en forme de tourillon pour un trou (15) d'un profilé de fixation (10) en forme de rail longitudinal à trous.

8. Dispositif selon l'une des revendications précédentes, caractérisé en ce que l'appendice (27) absorbant les forces transversales sur la plaque de base (16), présente des faces d'appui latérales (30, 31) destinées à venir en prise dans une rainure (14) d'un profilé de fixation (10) en forme de rail longitudinal à trous.

9. Dispositif selon l'une des revendications précédentes, caractérisé en ce que dans l'ouverture de réception (17) est prévu un élément de fixation (34) en forme de cheville, qui présente des appendices d'arrêt (35, 36) latéraux, en vue d'une venue en prise par enclenchement dans un profilé de fixation (10) en forme de rail longitudinal à trous.
